# EUROPÄISCHE PATENTANMELDUNG

(11) **EP 1 878 879 A1**
(43) Veröffentlichungstag der Anmeldung: **16.01.2008**
(21) Anmeldenummer: 06405306.9
(22) Anmeldetag: 14.07.2006
(51) Int. Cl.: F01D 25/00, F02C 6/12, F01D 5/28, F04D 25/04, F02B 37/00, F02B 39/00

(54) **Turbolader mit katalytischer Beschichtung**

(71) Anmelder: ABB RESEARCH LTD., 8050 Zürich (CH)
(72) Erfinder: Fuhrmann, Henning, CH-8048 Zürich (CH); Thiele, Martin, CH-5236 Remigen (CH); Auletta, Tommaso, SE-72211 Västeras (SE)
(74) Vertreter: ABB Patent Attorneys

(57) **Zusammenfassung**

Eine Strömungsmaschine mit einem Rotor und einem Stator ist zumindest teilweise auf einem strömungsführenden Teil mit einer katalytischen Beschichtung versehen. Die katalytische Beschichtung (7, 7') umfasst mindestens ein Oxid eines Übergangsmetalls oder ein Oxid eines Gemisches aus Übergangsmetallen, wobei die Übergangsmetalle Elemente der Gruppen IB, insbesondere Cu, Ag, Ag, II B, insbesondere Zn, Cd, Hg, III B insbesondere Sc, Y, IVB, insbesondere Ti, Zr, Hf, V B, insbesondere V, Nb, Ta, VI B, insbesondere Cr, Mo, W, VII B, insbesondere Mn, Tc, Re und / oder VIII B, insbesondere Fe, Ru, Os, Co, Rh, Ir, Ni, Pd, Pt sind.

## Beschreibung

### Technisches Gebiet

Die Erfindung betrifft eine Strömungsmaschine gemäss Oberbegriff des Patentanspruchs 1, einen Turbolader mit einem solchen Verdichter gemäss Oberbegriff des Patentanspruchs 10 und ein Verfahren zum Herstellen einer Strömungsmaschine gemäss Oberbegriff des Patentanspruchs 11.

### Stand der Technik

Die Verwendung von Abgasturboladern zur Leistungssteigerung von Brennkraftmaschinen ist heute weit verbreitet. Die Abgasturbine des Turboladers wird von den Abgasen der Brennkraftmaschine beaufschlagt und deren kinetische Energie zum Ansaugen und Verdichten von Luft für die Brennkraftmaschine verwendet. Durch die Verdichtung steigen die Temperatur und der Druck der Luft an. Es können dadurch Temperaturen von 180 °C oder höher an den Leitschaufeln des Diffusors und den Diffusorwänden auftreten.

Durch das Ansaugen von verschmutzter Luft können sich Verunreinigungen auf der dem zu verdichtenden Medium zugewandten Seite des Gaseintrittsgehäuses, auf dem Verdichterrad oder dem Diffusor niederschlagen. Wenn die verunreinigte Luft noch Ölpartikel enthält, setzen sich die Ölpartikel verstärkt fest bedingt durch die niedrige Oberflächenspannung von Öl. Oberhalb von 150 °C verflüchtigen sich die leichtflüchtigen Bestandteile des Öls. Bei Temperaturen von etwa 180 bis 260 °C tritt zusätzlich eine Verkokung ein. Diese Effekte führen zu Rückständen auf den Oberflächen der Wände. Die Rückstände bilden eine dicke Schicht mit rauher Oberfläche. Die Effizienz des Verdichters kann dadurch innerhalb kurzer Zeit um mehrere Prozent abnehmen.

Dieses Problem tritt verstärkt bei Brennkraftmaschinen mit Kurbelgehäuse-Entlüftung auf. Bei aufgeladenen Brennkraftmaschinen treten Verbrennungsgase zwischen Kolbenringen und Luftbüchse in das Kurbelgehäuse über. Ausserdem gelangt Luft über die Ölrückführleitung des Turboladers in das Kurbelgehäuse. Diese Gase werden als Blow-By Gase bezeichnet. Damit der Druck im Kurbelgehäuse nicht übermässig ansteigt, werden die Blow-By Gase abgeführt, stromaufwärts des Verdichterrades der angesaugten Luft zugeführt und zusammen mit der angesaugten Luft im Verdichter verdichtet. Die Blow-By Gase enthalten Ölpartikel, welche typischerweise einen Durchmesser von 0.1 bis 10 µm (Mikrometer) haben und in einer Konzentration von 5 bis 10 mg/m³ vorhanden sind.

Um die eingangs genannten Effekte zu vermeiden, werden Verdichter regelmässig gereinigt. Die Reinigung wird unter Teillast durchgeführt. Das Verdichterrad wird bei reduzierter Umdrehungsgeschwindigkeit rotiert und eine Flüssigkeit vor dem Verdichterrad der Strömung zugeführt.

Eine Vorrichtung der eingangs genannten Art ist aus der Druckschrift US 4,196,020 bekannt. Darin wird vorgeschlagen, eine abnehmbare Reinigungssprühvorrichtung zu Reinigungszwecken an das Gaseintrittsgehäuse einer Gasturbine anzuschliessen. Die Reinigungssprühvorrichtung beinhaltet Sammelleitungen mit Sprühdüsen. Zum Reinigen wird die Vorrichtung auf das Gaseintrittsgehäuse aufgesetzt, die Gasturbine eingeschaltet und über Sprühdüsen eine Flüssigkeit zum Reinigen gleichmässig auf die dem zu verdichtenden Medium zugewandten Seite des Gaseintrittsgehäuses und das Verdichterrad gesprüht. Mit dieser Reinigungssprühvorrichtung wird daher hauptsächlich das Verdichterrad gereinigt. Festsitzende Ablagerungen auf der Innenseite des Gaseintrittsgehäuses oder in dem sich nicht bewegenden Diffusor werden durch die fein versprühten Flüssigkeiten kaum entfernt. Je wärmer der Verdichter wird, bzw. je höher das Verdichtungsverhältnis zwischen der angesaugten Luft und der verdichteten Luft ist, desto fester sitzen die Verunreinigungen auf der Gehäuse-Innenwand und dem Diffusor und desto schlechter lassen sich diese Verunreinigungen entfernen. Zudem muss der Betrieb des Verdichters vor und nach jeder Reinigung unterbrochen werden, um die Reinigungssprühvorrichtung auf den Verdichter aufzusetzen, bzw. nach erfolgter Reinigung wieder zu entfernen.

Aus der Backofentechnik ist es bekannt, einen Backofen mit einer katalytischen Beschichtung auszukleiden, um das Festsetzen von Speiseölen zu vermeiden (US 4,515,862). Dazu wird ein Katalysator aus Alkalimetalloxid oder ein Seltene Erd-Alkalioxid mit einer Farbe gemischt, auf die sauber zu haltende Wand aufgetragen und gesintert. Die in Backöfen entstehenden Temperaturen von 200 bis 300 °C sind ausreichend, um mittels der katalytischen Beschichtung die Speiseöle zu zersetzen. Dabei ist es sehr wichtig, wie der Katalysator in der Farbe verteilt ist, damit er noch einen katalytischen Effekt zeigen kann.

### Darstellung der Erfindung

Es ist deshalb Aufgabe der vorliegenden Erfindung, eine Strömungsmaschine mit Stator und Rotor anzugeben, bei welchem die strömungsführenden Teile besonders bei hohen Temperaturen weitgehend sauber gehalten werden wird und bei der ein Festsetzen von ölhaltigen Verunreinigungen weitgehend vermieden wird. Weiterhin soll ein Turbolader mit einer solchen Strömungsmaschine und ein Verfahren zum Herstellen einer solchen Strömungsmaschine angegeben werden.

Diese Aufgabe wird erfindungsgemäss durch eine Strömungsmaschine mit den Merkmalen des Patentanspruchs 1, einem Turbolader mit den Merkmalen des Anspruchs 10 und einem Verfahren mit den Merkmalen des Patentanspruchs 11 gelöst.

Die erfindungsgemässe Strömungsmaschine weist einen Rotor und einen Stator auf, wobei die strömungsführenden Teile zumindest teilweise mit einer katalytischen Beschichtung versehen sind. Typischerweise handelt es sich bei der Strömungsmaschine um einen Turbolader, bei dem Rotor um ein Verdichterrad und bei dem Stator um ein Gaseintrittsgehäuse. Unter strömungsführenden Teile sind die Teile zu verstehen, welche im Strömungskanal angeordnet sind oder die den Strömungskanal begrenzen, wobei der Strömungskanal begrenzt ist durch die Teile des Stators und Rotors, welche dem zu verdichtendem Medium zugewandt sind. Durch die katalytische Beschichtung werden die ölhaltigen Verunreinigungen bei den typischerweise durch den Betrieb einer Strömungsmaschine erzeugten Temperaturen zersetzt und somit wird ein Festsetzen der Verunreinigungen weitgehend vermieden und die Wände bleiben sauber. Im Gegensatz zu Verdichtern aus dem Stand der Technik, bei denen die Verunreinigungen umso fester am Gaseintrittsgehäuse anhaften, je höher die Temperaturen in diesem Bereich sind, verstärkt sich der katalytische Effekt beim erfindungsgemässen Strömungsmaschinen bei höheren Temperaturen sogar noch und ein Festsetzen von ölhaltigen Verunreinigungen wird umso effizienter vermieden.

Weitere vorteilhafte Varianten und Ausführungsformen gehen aus den abhängigen Patentansprüchen hervor.

### Kurze Beschreibung der Zeichnungen

Im folgenden wird das erfindungsgemässe Verfahren und der Erfindungsgegenstand anhand eines bevorzugten Ausführungsbeispiels, welches in den beiliegenden Zeichnungen dargestellt ist, näher erläutert. Es zeigen:
Figur im Schnitt entlang seiner Maschinenachse einen Ausschnitt aus einem Turbolader mit einem Verdichter gemäss der Erfindung.

Die in der Zeichnung verwendeten Bezugszeichen und deren Bedeutung sind in der Bezugszeichenliste zusammengefasst aufgelistet. Die beschriebenen Ausführungsformen stehen beispielhaft für den Erfindungsgegenstand und haben keine beschränkende Wirkung.

### Wege zur Ausführung der Erfindung

Im folgenden wird die Erfindung erläutert am Beispiel eines Turboladers, umfassend einen Verdichter 1 mit einem Verdichterrad 3 und einem Gaseintrittsgehäuse 2. Die Erfindung kann aber auf beliebige Strömungsmaschinen mit einem Stator und Rotor angewandt werden.

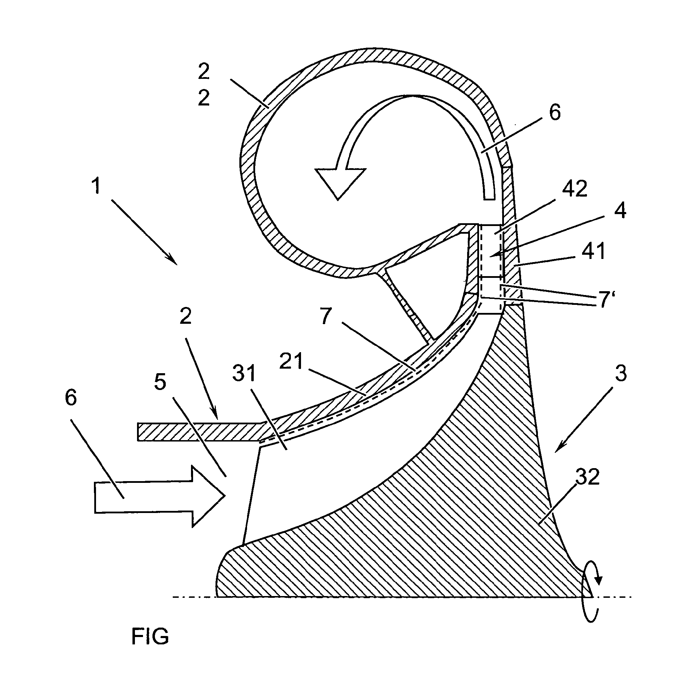

Die Figur zeigt im Schnitt entlang der Maschinenachse eines Turboladers einen verdichterseitigen Ausschnitt eines Turboladers mit einem Verdichter 1. Der Verdichter 1 weist ein Gaseintrittsgehäuse 2, ein auf einer Welle (nicht in der Figur dargestellt) gelagertes Verdichterrad 3 mit Laufschaufeln 31 und einer Nabe 32 sowie einen Diffusor 4 auf. Auf der Welle ist ebenfalls ein Turbinenrad gelagert (nicht in der Figur dargestellt). Das Gaseintrittsgehäuse 2 hat eine Gehäuse-Innenseite 21, welche dem zu verdichtenden Medium zugewandt ist und entlang der das zu verdichtende Medium strömt. Ein Strömungskanal 5 wird nach aussen begrenzt durch die Gehäuse-Innenseite 21 des Gaseintrittsgehäuses 2 und nach innen durch die Nabe 32 des Verdichterrades 3. Die Strömungsrichtung des zu verdichtenden Mediums 6 geht entlang des Strömungskanals 5 von der Öffnung des Gaseintrittsgehäuses in Richtung eines Diffusors 4 (durch Pfeile in Figur 1 dargestellt). Stromabwärts von den Laufschaufeln 31 geht das Gaseintrittsgehäuse 2 in eine Diffusorwand 41 des Diffusors 4 über. Der Diffusor 4 umfasst Leitschaufeln 42 sowie Diffusorwände 41, welche dem zu verdichtenden Medium zugewandt sind und die den Strömungskanal 5 nach aussen begrenzen. Der Diffusor geht stromabwärts in ein Schneckengehäuse 22 über.

Bei dem erfindungsgemässen Verdichter 1 sind strömungsführende Teile zumindest teilweise mit einer katalytischen Beschichtung versehen. Strömungsführende Teile sind beispielsweise die Teile, welche den Strömungskanal 5 begrenzen oder im Strömungskanal angeordnet sind, insbesondere die Gehäuse-Innenseite 21, das Verdichterrad 3, Diffusorwände 41 oder Diffusor-Leitschaufeln 42. In der Figur weist der Verdichter 1 auf der Gehäuse-Innenseite 21 des Gaseintrittsgehäuses 2 und auf den Diffusorwänden 41 und Diffusor-Leitschaufeln 42 eine katalytische Beschichtung 7 auf (durch eine gestrichelte Linie dargestellt). Eine katalytische Beschichtung 7, 7' kann auf jedem anderen strömungsführenden Teil aufgebracht werden, auf welchem beim Betrieb des Verdichters derart hohe Temperaturen erzeugt werden, dass ein katalytischer Effekt stattfinden kann.

Die Beschichtung 7, 7' umfasst mindestens ein Oxid eines Übergangsmetalls oder ein Oxid eines Gemisches aus Übergangsmetallen, d.h. ein Oxid mindestens eines Übergangsmetalles. Übergangsmetalle sind die Elemente der Gruppen I B (insbesondere Cu, Ag, Ag), II B (insbesondere Zn, Cd, Hg), III B (insbesondere Sc, Y), IV B (insbesondere Ti, Zr, Hf), V B (insbesondere V, Nb, Ta), VI B (insbesondere Cr, Mo, W), VII B (insbesondere Mn, Tc, Re) und / oder VIII B (insbesondere Fe, Ru, Os, Co, Rh, Ir, Ni, Pd, Pt). In einer bevorzugten Ausführungsform umfasst die Beschichtung mindestens ein Oxid oder ein Oxid eines Gemisches von Elementen jeweils dieser Gruppen der 4. Periode (Sc, Ti, V, Cr, Mn, Fe, Co, Ni, Cu, Zn) und/oder der 5. Periode (Y, Zr, Nb, Mo, Tc, Ru, Rh, Pd, Ag, Cd), vorzugsweise der 4. Periode.

Zusätzlich kann die Beschichtung noch mindestens ein Metalloxid umfassen, vorzugsweise Al-Oxid, oder die Beschichtung umfasst ein Oxid eines Gemisches aus mindestens einem Übergangsmetall und aus mindestens einem Metall, vorzugsweise Al und / oder Halbmetall, vorzugsweise Si. Als Materialien der Beschichtung 7, 7' sind insbesondere Oxide aus einer Legierung aus TiZrNi, TiCrSi, AlFeCrCo und / oder AlFeCuCr geeignet.

Geeignet ist beispielsweise eine Beschichtung aus einem Oxid aus einem Gemisch von Al in einem Bereich von 57 bis 85 at %, vorzugsweise in einem Bereich von 64 bis 78 at %, vorzugsweise in einem Bereich von 64.5 at % bis 74.5 at % und im besonderen 71 at %, Fe in einem Bereich von 6.9 bis 10.4 at %, vorzugsweise in einem Bereich von 7.8 bis 9.6 at %, vorzugsweise in einem Bereich von 8.3 bis 9.1 at % und im besonderen 8.7 at %, Cr in einem Bereich von 8.5 bis 12.7 at %, vorzugsweise in einem Bereich von 9.5 bis 11.7 at %, vorzugsweise in einem Bereich von 10.1 bis 11.1 at % und im besonderen 10.6 at % und Cu in einem Bereich von 7.8 bis 11.6 at %, vorzugsweise in einem Bereich von 8.7 bis 10.7 at %, vorzugsweise in einem Bereich von 9.2 bis 10.2 at.% und im besonderen 9.7 at %. Die angegebenen Anteile des Gemisches sind dabei so zu verstehen, dass die Anteile der Metalle/Übergangsmetalle zusammen 100 % ergeben, wobei das Gemisch noch weitere Metalle / Übergangsmetalle umfassen darf, d.h. die Bereichsangaben beziehen sich nur auf das relative Verhältnis von Al, Fe, Cr und Cu zueinander, die Anwesenheit weiterer Metalle /Übergangsmetalle ist aber auch möglich. Ein solches Gemisch ist beispielsweise von der Firma Saint Gobain unter dem Markennamen Cristome A1 mit einer Zusammensetzung von 71 % Al, 8.7 % Fe, 10.6 % Cr und 9.7 % Cu erhältlich.

Eine weitere geeignete Beschichtung ist ein Oxid aus einem Gemisch von Al in einem Bereich von 57 bis 85 at %, vorzugsweise in einem Bereich von 64 bis 78 at %, vorzugsweise in einem Bereich von 64.5 at % bis 74.5 at % und im besonderen 71.3 at %, Fe in einem Bereich von 6.5 bis 9.7 at %, vorzugsweise in einem Bereich von 7.3 bis 8.9 at %, vorzugsweise in einem Bereich von 7.7 bis 8.5 at % und im besonderen 8.1 at %, Co in einem Bereich von 10.2 bis 15.4 at %, vorzugsweise in einem Bereich von 11.5 bis 14.1 at %, vorzugsweise in einem Bereich von 12.2 bis 13.4 at % und im besonderen 12.8 at % und Cr in einem Bereich von 6.2 bis 9.4 at %, vorzugsweise in einem Bereich von 7.0 bis 8.6 at %, vorzugsweise in einem Bereich von 7.4 bis 8.2 at % und im besonderen 7.8 at %. Die angegebenen Anteile des Gemisches sind dabei so zu verstehen, dass die Anteile der Metalle/Übergangsmetalle zusammen 100 % ergeben, wobei das Gemisch noch weitere Metalle / Übergangsmetalle umfassen darf, d.h. die Bereichsangaben beziehen sich nur auf das relative Verhältnis von Al, Fe, Cr und Cu zueinander, die Anwesenheit weiterer Metalle / Übergangsmetalle ist aber auch möglich. Ein solches Gemisch ist beispielsweise von der Firma Saint Gobain unter dem Markennamen Cristome BT1 mit einer Zusammensetzung von 71.3 at % Al, 8.1 at % Fe, 12.8 at % Co und 7.8 at % Cr erhältlich.

Die katalytische Beschichtung 7, 7' ist dauerhaft hitzebeständig bei den beim Betrieb des Turboladers entstehenden Temperaturen.

Zur Herstellung eines erfindungsgemässen Turboladers kann die katalytische Beschichtung 7 durch thermisches Spritzen auf die Gehäuse-Innenseite 21 des Gaseintrittsgehäuses 2 aufgebracht werden. Beschichtungsverfahren durch Thermisches Spritzen sind beispielsweise in dem Dokument "Moderne Beschichtungsverfahren" von F.-W. Bach et al., Wiley-VCH Verlag, 2000 angegeben.

Im Falle eines Verdichters mit Diffusor 4 ist es auch denkbar, auf den Diffusorwänden 41 eine katalytische Beschichtung 7' aufzubringen. Typische Verfahren des thermischen Spritzens sind Flammspritzen, Hochgeschwindigkeitsflammspritzen, Lichtbogenspritzen und Plasmaspritzen. Vorteilhafterweise wird ein Verfahren ausgewählt, welches Oberflächen mit geringer Porosität erzeugt, bzw. geringer Rauheit. Typischerweise wird ein Übergangsmetall oder eine Legierung aus Übergangsmetallen auf die Gehäuse-Innenseite 21 des Gaseintrittsgehäuses 2 aufgebracht, insbesondere durch thermisches Spritzen und die Oxidation des Übergangsmetalls oder der Legierung der Übergangsmetalle erfolgt während des Aufbringungsschrittes, insbesondere während des thermischen Spritzens.

Die Oberfläche der katalytischen Beschichtung 7, 7' kann nach dem Spritzen weiter behandelt werden, bis die Oberfläche eine gewünschte Rauheit aufweist. Einerseits ist für den Betrieb des Verdichters eine glatte Oberfläche vorteilhaft, da durch diese oberflächennah wenig Verwirbelungen des Luftstroms entstehen, andererseits ist die katalytische Wirkung grösser, wenn die Oberfläche vergrössert wird, da in diesem Fall eine grössere Fläche der katalytischen Beschichtung zum katalytischen Effekt beiträgt.

Als Oberflächenbehandlung zur Erzielung der gewünschten Rauheit kann die Oberfläche durch ein geeignetes Verfahren wie Schleifen, Schleppschleifen oder Glasperlen geglättet werden. Anschliessend können in der Oberfläche gezielt wieder Riefen oder Rillen erzeugt werden, beispielsweise durch Sandstrahlen, so dass Vertiefungen entstehen, durch die die Oberfläche der katalytischen Beschichtung vergrössert wird im Vergleich zu einer glatten Oberfläche, aber durch die kaum Verwirbelungen entstehen, da der Luftstrom nur wenig durch derartige Vertiefungen beeinflusst wird.

Die maximale Rauhtiefe sollte typischerweise 40 µm (entsprechend einer Rauheitsklasse von N9) nicht überschreiten. Je nach Anwendung, bzw. abhängig von dem Herstellverfahren kann die maximale Rauhtiefe auch 25 µm (entsprechend einer Rauheitsklasse von N8), 16 µm (entsprechend einer Rauheitsklasse von N7) oder sogar 6.4 µm (entsprechend einer Rauheitsklasse von N6) betragen. Der Mittenrauhwert ist typischerweise kleiner als 6.3 µm. Auch die Mittenrauheit kann abhängig von der Anwendung, bzw. von dem Herstellverfahren kleiner als 3.2, 1.6 oder sogar 0.8 µm sein.

### Bezugszeichenliste

- 1: Verdichter
- 2: Gaseintrittsgehäuse
- 21: Gehäuse-Innenseite
- 22: Schneckengehäuse
- 3: Verdichterrad
- 31: Laufschaufeln
- 32: Nabe
- 4: Diffusor
- 41: Diffusorwand
- 42: Leitschaufeln
- 5: Strömungskanal
- 6: Strömungsrichtung
- 7, 7': Katalytische Beschichtung

## Patentansprüche

1. Strömungsmaschine, umfassend einen Rotor und einen Stator, **dadurch gekennzeichnet, dass** ein strömungsführendes Teil zumindest teilweise mit einer katalytischen Beschichtung (7, 7') versehen ist.

2. Strömungsmaschine nach Anspruch 1, **dadurch gekennzeichnet, dass** es sich bei der Strömungsmaschine um einen Verdichter (1), bei dem Rotor um ein Verdichterrad (3) und bei dem Stator um ein Gaseintrittsgehäuse (2) handelt.

3. Strömungsmaschine nach einem der Ansprüche 1 oder 2, **dadurch gekennzeichnet, dass** die katalytische Beschichtung (7,7') mindestens ein Oxid eines Übergangsmetalls oder ein Oxid eines Gemisches aus Übergangsmetallen umfasst, wobei die Übergangsmetalle Elemente der Gruppen I B, insbesondere Cu, Ag, Ag, II B, insbesondere Zn, Cd, Hg, III B insbesondere Sc, Y, IV B, insbesondere Ti, Zr, Hf, V B, insbesondere V, Nb, Ta, VI B, insbesondere Cr, Mo, W, VII B, insbesondere Mn, Tc, Re und / oder VIII B, insbesondere Fe, Ru, Os, Co, Rh, Ir, Ni, Pd, Pt sind.

4. Strömungsmaschine nach Anspruch 3, **dadurch gekennzeichnet, dass** es sich bei dem Übergangsmetall oder bei dem Gemisch aus Übergangsmetallen um Elementen jeweils der Gruppen der 4. Periode, insbesondere Sc, Ti, V, Cr, Mn, Fe, Co, Ni, Cu, Zn und/oder der Gruppen der 5. Periode, insbesondere Y, Zr, Nb, Mo, Tc, Ru, Rh, Pd, Ag, Cd handelt, vorzugsweise um TiZrNi.

5. Strömungsmaschine nach Anspruch 1 oder 2, **dadurch gekennzeichnet, dass** die katalytische Beschichtung (7,7') ein Oxid eines Gemisches aus mindestens einem Übergangsmetall und mindestens einem Metall, vorzugsweise Al, und/oder Halbmetall, vorzugsweise Si, umfasst, wobei die Übergangsmetalle Elemente der Gruppen I B, insbesondere Cu, Ag, Ag, II B, insbesondere Zn, Cd, Hg, III B insbesondere Sc, Y, IV B, insbesondere Ti, Zr, Hf, V B, insbesondere V, Nb, Ta, VI B, insbesondere Cr, Mo, W, VII B, insbesondere Mn, Tc, Re und / oder VIII B, insbesondere Fe, Ru, Os, Co, Rh, Ir, Ni, Pd, Pt sind.

6. Strömungsmaschine nach Anspruch 5, **dadurch gekennzeichnet, dass** das Gemisch AI in einem Bereich von 57 bis 85 at %, vorzugsweise in einem Bereich von 64 bis 78 at %, vorzugsweise in einem Bereich von 64.5 bis 74.5 at % und im besonderen 71 at %, Fe in einem Bereich von 6.9 bis 10.4 at %, vorzugsweise in einem Bereich von 7.8 bis 9.6 at %, vorzugsweise in einem Bereich von 8.3 bis 9.1 at %, und im besonderen 8.7 at %, Cr in einem Bereich von 8.5 bis 12.7 at %, vorzugsweise in einem Bereich von 9.5 bis 11.7 at %, vorzugsweise in einem Bereich von 10.1 bis 11.1 at % und im besonderen 10.6 at % und Cu in einem Bereich von 7.8 bis 11.6 at %, vorzugsweise in einem Bereich von 8.7 bis 10.7 at %, vorzugsweise in einem Bereich von 9.2 bis 10.2 at % und im besonderen 9.7 at % umfasst.

7. Strömungsmaschine nach Anspruch 5, **dadurch gekennzeichnet, dass** das Gemisch Al in einem Bereich von 57 bis 85 at %, vorzugsweise in einem Bereich von 64 bis 78 at %, vorzugsweise in einem Bereich von 64.5 at % bis 74.5 at % und im besonderen 71.3 at %, Fe in einem Bereich von 6.5 bis 9.7 at %, vorzugsweise in einem Bereich von 7.3 bis 8.9 at %, vorzugsweise in einem Bereich von 7.7 bis 8.5 at % und im besonderen 8.1 at %, Co in einem Bereich von 10.2 bis 15.4 at %, vorzugsweise in einem Bereich von 11.5 bis 14.1 at %, vorzugsweise in einem Bereich von 12.2 bis 13.4 at % und im besonderen 12.8 at % und Cr in einem Bereich von 6.2 bis 9.4 at %, vorzugsweise in einem Bereich von 7.0 bis 8.6 at %, vorzugsweise in einem Bereich von 7.4 bis 8.2 at % und im besonderen 7.8 at % umfasst.

8. Strömungsmaschine nach einem der Ansprüche 1 bis 7, **dadurch gekennzeichnet, dass** es sich bei der katalytischen Beschichtung (7, 7') um eine thermogespritzte Beschichtung handelt.

9. Strömungsmaschine nach einem der Ansprüche 1 bis 8, **dadurch gekennzeichnet, dass** die katalytische Beschichtung (7, 7') eine Oberfläche aufweist mit einer maximalen Rauheitstiefe von 40 µm und/oder einer Mittenrauheit von kleiner als 6.3 µm.

10. Turbolader, einen Verdichter (1) nach Anspruch 2 enthaltend.

11. Verfahren zum Herstellen einer Strömungsmaschine mit einem Stator und einem Rotor, das Verfahren umfassend folgende Verfahrensschritte:
- eine katalytische Beschichtung (7, 7') wird zumindest teilweise auf ein strömungsführendes Teil thermisch aufgespritzt,
- anschliessend wird die Oberfläche der katalytischen Beschichtung (7, 7') derart behandelt, bis die gewünschte Rauheit erreicht wird.

12. Verfahren nach Anspruch 11, **dadurch gekennzeichnet, dass** die Behandlung der Oberfläche zur Erreichung der gewünschten Rauheit einen Schritt zur Glättung der Oberfläche und anschliessend einen Schritt zur Erzeugung einer vorgegebenen Rauheit in die geglättete Oberfläche umfasst.
